# EUROPEAN PATENT SPECIFICATION

(11) **EP 1 667 036 B1**
(45) Date of publication and mention of the grant of the patent: **10.10.2007**
(21) Application number: 04106231.6
(22) Date of filing: 01.12.2004
(51) Int. Cl.: G06F 17/30

(54) **Method of Finding a Search String in a Document for Viewing on a Mobile Communication Device**
Verfahren um eine Zeichenkette in einem Dokument zur Ansicht auf einem mobilen Kommunikationsgerät zu finden
Méthode de trouver des chaînes de charactères dans un document visualisé sur un dispositif de communication mobile

(43) Date of publication of application: 07.06.2006
(73) Proprietor: Research In Motion Limited, Waterloo, Ontario N2L 3W8 (CA)
(72) Inventor: Sylthe, Olav A., Atlanta, GA Georgia 30338 (US); Yuan, Jianwei (Oliver), Cumming, GA Georgia 30041 (US); Dumitru, Dan, Atlanta, GA Georgia 30328 (US)
(74) Representative: Rickard, David John

(56) References cited:
- WO-A-01/65354
- MILIC-FRAYLING N ET AL: "SmartView and SearchMobil: providing overview and detail in handheld browsing" MOBILE AND UBIQUITOUS INFORMATION ACCESS. MOBILE HCI 2003 INTERNATIONAL WORKSHOP. REVISED AND INVITED PAPERS (LECTURE NOTES IN COMPUTER SCIENCE VOL.2954) SPRINGER-VERLAG BERLIN, GERMANY, 8 August 2003 (2003-08-08), pages 158-171, XP002318043 ISBN: 3-540-21003-2 Retrieved from the Internet: URL:http://www.springerlink.com/index/H8K7 GF5F6EXK19KR.pdf> [retrieved on 2005-02-16]
- CHEN Y ET AL: "Detecting Web Page Structure for Adaptive Viewing on Small Form Factor Devices" THE TWELFTH INTERNATIONAL WORLD WIDE WEB CONFERENCE, 20 May 2003 (2003-05-20), - 24 May 2003 (2003-05-24) XP002318044 BUDAPEST, HUNGARY Retrieved from the Internet: URL:http://research.microsoft.com/asia/dlo ad_files/group/system/p297-chen.pdf> [retrieved on 2005-02-16]
- KAO H-Y ET AL: "DOMISA: DOM-based Information Space Adsorption for Web Information Hierarchy Mining" PROCEEDINGS OF THE 4TH SIAM INTERNATIONAL CONFERENCE ON DATA MINING, 22 April 2004 (2004-04-22), - 24 April 2004 (2004-04-24) XP002318045 FLORIDA, USA Retrieved from the Internet: URL:http://cscl.iis.sinica.edu.tw/document s/bobby/siamsdm04_camera.pdf> [retrieved on 2005-02-16]

## Description

The following is directed in general to displaying content on mobile communication devices, and more particularly to a method for finding a search string in a document attachment and viewing the corresponding section on a mobile commnication device without retrieving the full document content.

Mobile communication devices are becoming increasingly popular for business and personal use due to a relatively recent increase in number of services and features that the devices and mobile infrastructures support. Handheld mobile communication devices, sometimes referred to as mobile stations, are essentially portable computers having wireless capability, and come in various forms. These include Personal Digital Assistants (PDAs), cellular phones and smart phones. While their reduced size is an advantage to portability, bandwidth and processing constraints of such devices present challenges to the downloading and viewing of documents, such as word processing documents, tables and images.

Methods of formatting full size web pages for viewing on a small screen portable device is described in Milic-Frayling N et al: "SmartView and SearchMobil: providing overview and detail in handheld browsing" Mobile and Ubiquitous Information Access. Mobile HCI 2003 International Workshop. Revised and Invited Papers (Lecture Notes in Computer Science Vol. 2954) Springer-Verlag Berlin, Germany, 8 August 2003 (2003-08-08), pages 158-171, XP002318043 ISBN: 3-540-21003-2 www.springerlink.com/index/H8K7 GF5F6EXK19KR.pdf [retrieved 2005-02-16].

Electronic documents are produced using various computer programs, such as word processors, spreadsheet programs, financial software, and presentation software. It is customary to provide a "Find" command in such programs for quickly locating a search string of interest in a document, etc., without the user being required to read through the entire document.

The downloading of an entire document to a mobile communication device consumes a large amount of bandwidth, especially when the document is very large. In addition, viewing even a portion of such a downloaded document on the device consumes substantial device CPU/memory/battery resources.

For example, if a user wishes to view only a paragraph in a section in the middle of a 400-page document, the section that contains some of the default properties for the paragraph, or even the entire document, must be transmitted to the mobile communication device. Yet, the user only views a small portion of the document on the mobile communication device.

Consequently, it is known in the art to provide an attachment server to deliver on-demand content to the user of a mobile communication device in order to minimize bandwidth, and device CPU/memory usage. This content may then be viewed on the device using an attachment viewer.

An example of such as system is described in WO01/65354, in which a document model object (DOM) of a document is created with a number of pages depending on the characteristics of a requesting mobile device, these pages of the document being downloaded to the mobile device as required by the user.

Currently, the "Find" command within the attachment viewer on a mobile communication device can only find a user entered search term if the attachment content already is present on the device (i.e. it has already been retrieved/downloaded to the device).

Some document attachments can easily be in the range of several hundred pages or contain large amounts of textual information, as indicated above. For a user to be able to find all occurrences of a search term for such a large document attachment, all of the content must be retrieved to the device from the server in a sequential fashion. This is a very time consuming as well as a bandwidth and device CPU/memory intensive operation.

### GENERAL

The problem of having to retrieve the entire content of a document attachment to a mobile communication device in order to find all occurrences of a search string within the document may be resolved by the present description. A server find funtion is provided for initiating a search on the attachment server and returning only the appropriate section(s) containing the search term to the device. Any skipped (i.e. non-retrieved document content) may be visually indicated to the user for later retrieval. The non sequential access according to the present server find function allows for minimized bandwidth usage and a better on demand attachment viewing experience.

The server find feature set forth herein is a device and server side function that allows a user to enter a search term for a document attachment into his/her mobile communication device. If no (or any more) occurrences of the term are found on the device, the device then prompts the user to initiate a server side search. If the user accepts, then the server searches the document attachment and returns the first section of text that contains the search term to the device for viewing by the user. This approach can then be repeated until the server find feature reports that no further "hits" have been found on the server.

In particular in one aspect there is provided a server capable of locating a search string in a document stored on the server comprising: means for building and caching a graph structure within said server representing a map of said document, wherein said graph structure paginates said document into individual chunks; means for transmitting successive chunks of said document along with a total number of said individual chunks; means for searching through remaining chunks within said server for a search string; and means for transmitting each of said remaining chunks containing said search string in the event said search string is located in said remaining chunks; wherein said searching means further comprises:
means for receiving said search string and an index range of said remaining chunks;
means for searching said remaining chunks within said index range for said search string; and
means for transmitting a first chunk containing said search string and an associated chunk index in the event said search string is located.
Said searching means may further comprise:
means for extracting said search string and said index range to be searched;
means for iterating the graph structure and for each node in said range of remaining chunks parsing any paragraph and text commands, and for each paragraph command retrieving and storing any text content from said text commands in a paragraph content variable and searching said text content in said paragraph content variable for said search string; and
means for maintaining said graph structure for each of said remaining chunks containing said search string upon locating said search string and transmitting each of said remaining chunks and associated chunk indexes.
The server may further comprise means for extracting search options along with said search string and index range, and reordering said index range based on said search options. The server may be capable of displaying the search string on a mobile device. Said individual chunks may be displayed on said mobile device. The transmitting of said successive chunks may be user initiated. Said successive chunks may be transmitted from said server to said mobile device for display by said mobile device.

In another aspect there is provided a process for locating a search string in a document stored on the server and displaying the search string on a mobile device comprising: building and caching a graph structure within said server representing a map of said document, wherein said graph structure paginates said document into individual chunks for display on said mobile device; user initiated transmitting of successive chunks of said document from said server to said mobile device for display by said mobile device along with a total number of said individual chunks; user initiated searching of at least one of said successive chunks within said mobile device; and in the event said search string is not located and the total number of said individual chunks has not been searched then initiating a further search through remaining chunks within said server; in the event said search string is located within said remaining chunks transmitting a first chunk containing said search string; and in the event said search string is located in either said at least one of said successive or remaining chunks then highlighting said search string within a said chunk at said mobile device, and otherwise providing an indication at said mobile device of no matches found. Initiating said further search may comprise:
sending said search string and an index range of said remaining chunks subsequent to said at least one of said successive chunks from said mobile device to said server;
searching said remaining chunks within said index range for said search string; and
in the event said search string is located then transmitting a first chunk containing said search string and an associated chunk index from the server to said device.
Said highlighting may comprise updating a display of said device to reflect the position in the document where the search string is located. The process may further comprise generation of a display at said mobile communication device for prompting said user to initiate said further search through remaining chunks within said server. The process may further comprise generation of a skipped content indicator bar on said display between said successive chunks, thereby providing an indication to said user of said remaining chunks within the server not yet been transmitted to the device. Said searching said remaining chunks may comprise:
extracting said search string and said index range to be searched (73, 75);
iterating the graph structure (81) and for each node in said range of remaining chunks parsing any paragraph and text commands (85, 87, 89), and for each paragraph command retrieving and storing any text content from said text commands in a paragraph content variable (93) and searching said text content in said paragraph content variable for said search string (95); and
upon locating said search string persisting (97) said graph structure for each of said remaining chunks containing said search string and transmitting each of said remaining chunks and associated chunk indexes to said mobile device.

In another embodiment there may be provided a process implementable in a server for locating a search string in a document stored on the server comprising:
building (34) and caching (35) a graph structure within said server (28) representing a map of a document (30), wherein said graph structure paginates said document into individual chunks;
transmitting successive chunks of said document along with a total number of said individual chunks;
searching through remaining chunks within said server for a search string (61); and
in the event said search string is located in said remaining chunks then transmitting each of said remaining chunks containing said search string (65);
wherein said searching further comprises:
receiving said search string and an index range of said remaining chunks;
searching said remaining chunks within said index range for said search string; and
in the event said search string is located then transmitting a first chunk containing said search string and an associated chunk index.
Said searching may further comprise:
extracting said search string and said index range to be searched (73, 75);
iterating the graph structure (81) and for each node in said range of remaining chunks parsing any paragraph and text commands (85, 87, 89), and for each paragraph command retrieving and storing any text content from said text commands in a paragraph content variable (93) and searching said text content in said paragraph content variable for said search string (95); and
upon locating said search string persisting (97) said graph structure for each of said remaining chunks containing said search string and transmitting each of said remaining chunks and associated chunk indexes.

The processes may further comprise extracting search options along with said search string and index range, and reordering said index range based on said search options. Said graph structure may be a Document Object Model (DOM).

In another aspect there is provided a process implementable on a mobile device for locating a search string in a document stored on a server comprising: receiving and displaying successive chunks of a document; searching at least one of said successive chunks for a user entered search string and in the event said search string is located then highlighting said search string; in the event said search string is not located prompting said user to initiate a further search through remaining remotely stored chunks within said server; and otherwise providing an indication at said mobile device of no matches found.

In another aspect there is provided a server capable of locating a search string in a document stored on the server comprising: means for building and caching a graph structure within said server representing a map of a document, wherein said graph structure paginates said document into individual chunks; means for transmitting successive chunks of said document along with a total number of said individual chunks; means for searching through remaining chunks within said server for a search string; and means for transmitting each of said remaining chunks containing said search string in the event said search string is located in said remaining chunks wherein said searching means further comprises:
means for receiving said search string and an index range of said remaining chunks;
means for searching said remaining chunks within said index range for said search string; and
means for transmitting a first chunk containing said search string and an associated chunk index in the event said search string is located.

In another aspect there is provided a mobile device capable of locating a search string in a document stored on a server comprising: means for receiving and displaying successive chunks of a document; means for searching at least one of said successive chunks for a user entered search string and in the event said search string is located then highlighting said search string; means for prompting said user to initiate a further search through remaining remotely stored chunks within said server in the event said search string is not located; and means for providing an indication at said mobile device of no matches found in the event that no matches are found. The mobile device
may further comprise means for updating a display of said device to reflect the position in the document where the search string is located. The mobile device may further comprise means for generation of a skipped content indicator bar on said display between said successive chunks, thereby providing an indication to said user of said remaining chunks within the server not yet been transmitted to the device.

In another aspect there is provided a computer readable medium executable on a processor of a server according to claim 22. In another aspect there is provided a computer readable medium executable on a processor of a mobile device according to claim 23.

Additional aspects and advantages will be apparent to a person of ordinary skill in the art, residing in the details of construction and operation as more fully hereinafter described and claimed, reference being had to the accompanying drawings.

### Brief Description of the Drawings

A detailed description of the preferred embodiment is set forth in detail below, with reference to the following drawings, in which:
Figure 1 is a block diagram of a network environment in which the preferred embodiment may be practiced;
Figure 2 is a tree diagram showing the basic structure of a Document Object Model (DOM) used in the preferred embodiment;
Figure 3 shows the top-level of the DOM structure in Figure 2;
Figure 4 shows an exemplary DOM structure for a word processing document;
Figure 5 shows an exemplary DOM structure for a table document;
Figure 6 shows an exemplary DOM structure for a word processing document containing an image subdocument;
Figure 7 is a flowchart showing document DOM structure construction and pagination;
Figures 8A and 8B show a graphical user interface on the mobile communication device for invoking the server find command;
Figure 9 shows a message on the graphical user interface indicating that a search string has not been found;
Figure 10 is a flowchart showing steps in performing a device side request for initiating the server find command, according to a preferred embodiment; and
Figure 11 is a flowchart showing steps in executing the find command within the server, according to the preferred embodiment.

### Description of Preferred Embodiment

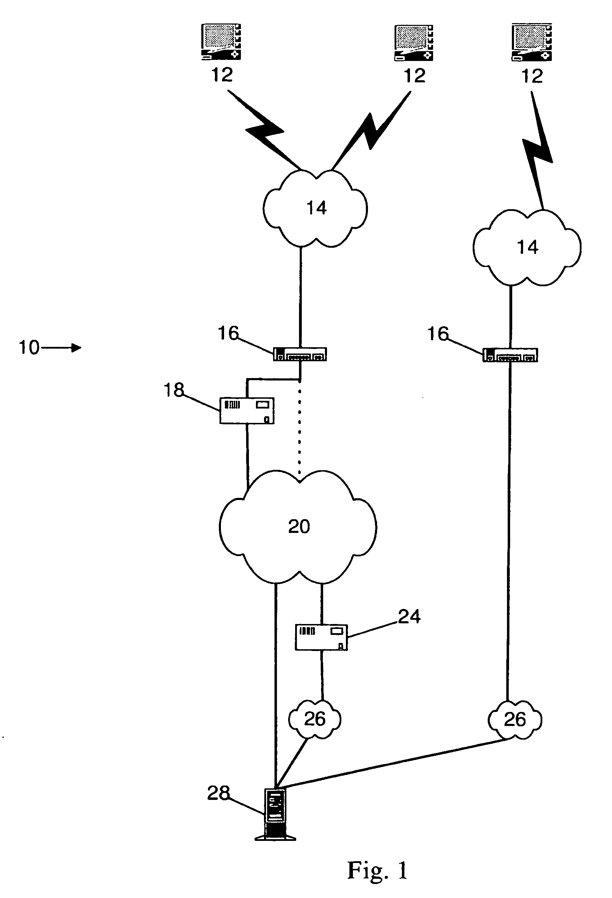

With reference to Figure 1, network environment 10 is shown in which the preferred embodiment may be practiced. Network environment 10 includes mobile devices 12 communicating via a wireless network 14 to a server 28 for downloading document attachments to the mobile devices 12. While only one server 28 is shown for illustration purposes, a person of skill in the art will understand that network environment 10 could have many such servers for hosting web sites or graphic download sites, providing access to picture files such as JPEG, TIFF, BMP, PNG, SGI, MP4, MOV, GIF, SVG, etc. As would be understood by one of ordinary skill in the art, wireless networks 14 include GSM/GPRS, CDPD, TDMA, iDEN Mobitex, Data TAC networks, or future networks such as EDGE or UMTS, and broadband networks like Bluetooth and variants of 802.11.

A connection to a fixed service requires special considerations, and may require special permission as authorized through a Network Access Point (NAP) 16. For generic services, such as web access, a proxy-gateway or Network Address Translator (NAT) 18 may be provided so that a network operator can control and bill for the access. NATs 18 enable management of a limited supply of public Internet addresses for large populations of wireless mobile devices. Solutions offered by a proxy-gateway or NAT 18 often involve a complex infrastructure, and thus may be managed by value-added service providers (VASPs), which provide, for instance, WAP gateways, WAP proxy gateway solutions, multi-media messaging servers (MMS) and Internet Multi-Media Services (IMS).

Private Intranet services 26 may require an associated Private Intranet Proxy Gateway 24 for accessing content on server 28. Such private services include WML access to corporate mail systems, HTML access to CRM databases, or any other services that deliver information as formatted data with links and URLs embedded. As shown, it is possible that a private service 26 may be connected directly to the wireless network 14, as opposed to being connected via Internet 20.

Referred to throughout this document, for the purpose of describing the preferred embodiment, is the structure of a Document Object Model (DOM) for a document attachment to be viewed on a mobile device 12.

The attachment server 28 uses a file-parsing distiller in the preferred embodiment, for a specific document type, to build an in-memory Document Object Model (DOM) structure representing an attachment of that document type. The document DOM structure is stored in a memory cache of server 28, and can be iterated bi-directionally.

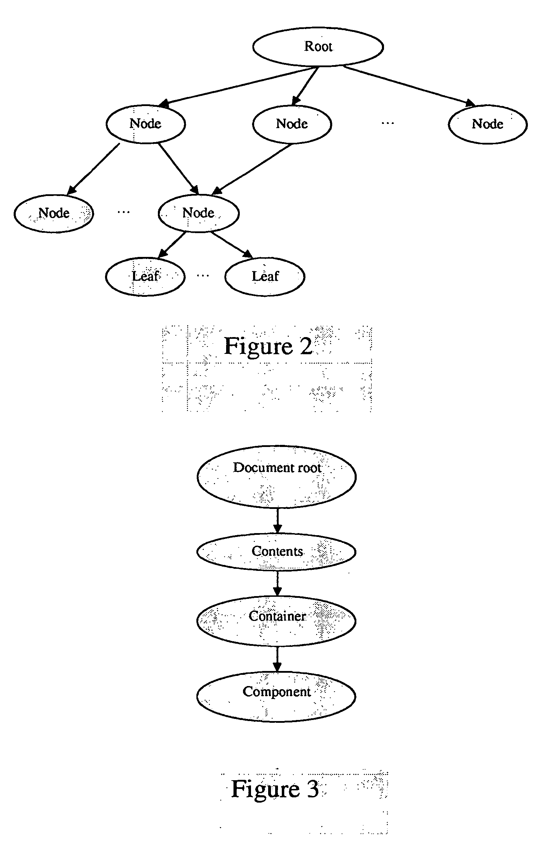

As shown in Figure 2, the graph-based document DOM structure consists of nodes and leaves. The nodes serve as the parents of leaves and nodes, while leaves are end points of a branch in the graph. Each node and leaf can have a set of attributes to specify its own characteristics. For example, a paragraph node can contain attributes to specify its alignment, style, entry of document TOC, etc. In addition, each of the nodes and the leaves has a unique identifier, called a DOM ID, to identify itself in the document DOM structure.

The document DOM structure is divided into three parts: top-level, component and references. The top level refers to the document root structure, while the main document is constructed in the component and the references represent document references to either internal or external sub-document parts. The following paragraphs examine each part in detail.

The root node of a document DOM structure, referred to as "Document", contains several children nodes, referred to as "Contents", which represent different aspects of the document contents. Each "Contents" node contains one or multiple "Container" nodes used to store various document global attributes. The children of the "Container" nodes are components, which store the document structural and navigational information. When the attachment server 28 builds the DOM structure for an attachment file for the first time, the top-level structure is a single parent-child chain as shown in Figure 3:

Three types of components are defined by the attachment server 28: text components, table components and image components, which represent text, tables and images in a document, respectively. The text and table components are described in detail below, and the image component structure is identical.

A component consists of a hierarchy of command nodes. Each command represents a physical entity, a property, or a reference defined in a document. For the text component, the physical entity commands are page, section, paragraph, text segments, comments, footnote and endnote commands, which by name define the corresponding entity contained in a document. The property commands for the text component are font, text color, text background color, hyperlink start/end and bookmark commands. The text component has only one reference command, referred to as the text reference command, which is used to reference a subdocument defined in the main body of a document. Usually, the children of a text component are page or section command nodes that, in turn, comprise a set of paragraph command nodes. The paragraph command can contain one or multiple nodes for the remaining command types.

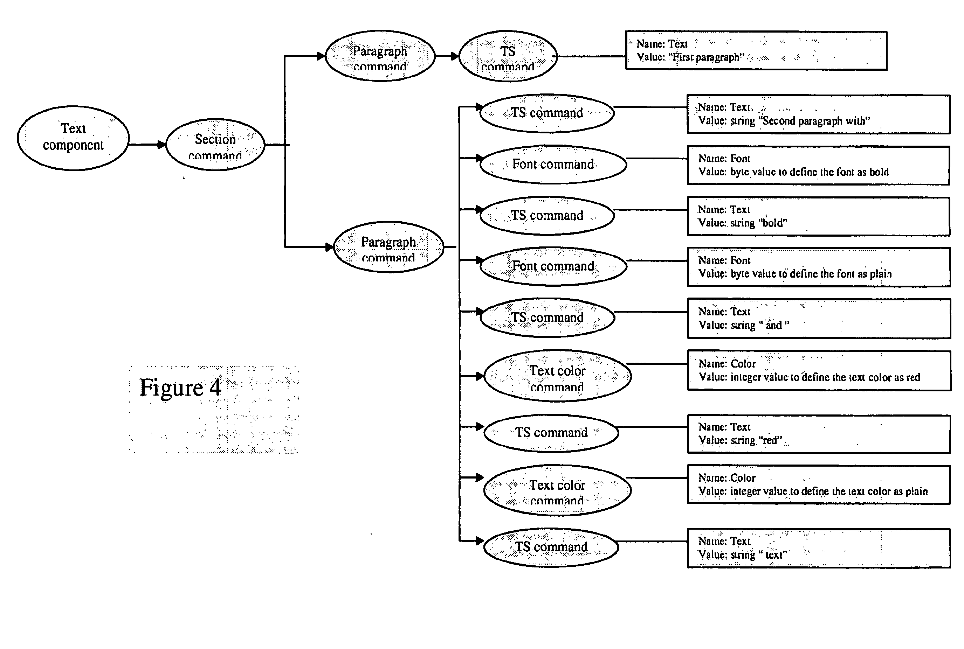

Using the following sample text document, the corresponding document DOM structure is shown in Figure 4:

| |
|---|
| First paragraph. |
| Second paragraph with bold and red text. |

As Figure 4 demonstrates, the section command, which is the child of the text component, consists of two paragraph commands. The first paragraph command contains one text segment command and the text content for that paragraph is added as an attribute to the text segment command. The second paragraph command has a relatively more complex structure, as the text properties in the paragraph are much richer. Each time a text property (font, text color, etc) changes, a corresponding text property command is created and the change value is added to that command as an attribute. The subsequent text segment command records the text with the same text property as an attribute. As document structure gets richer and more complex, more commands of corresponding types are created and the document properties are added as attributes to those commands.

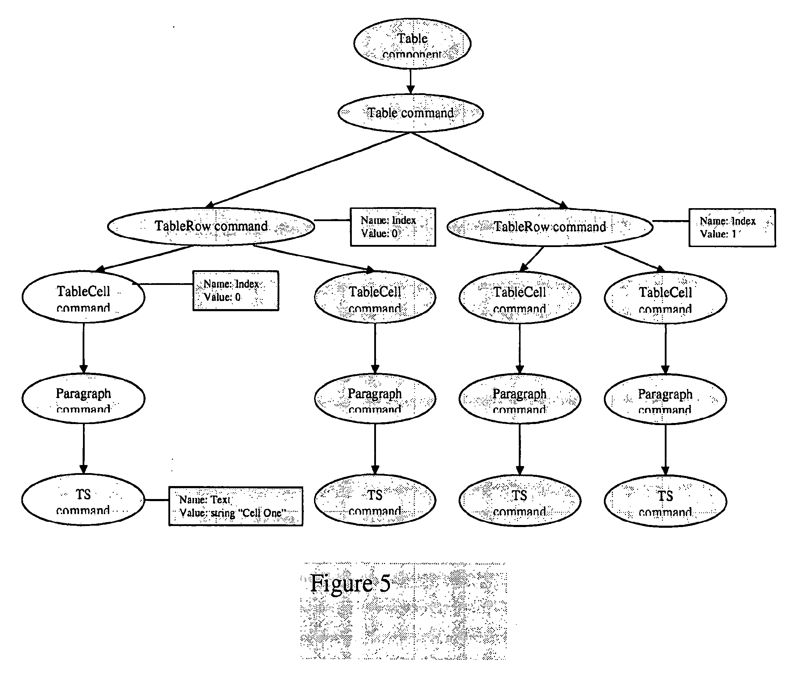

The table component has the same three types of commands as the text component, but different command names. The document DOM structure for the sample table document below is shown in Figure 5:

| | | | |
|---|---|---|---|
| | | | |
| | Cell One | Cell Two | |
| | Cell Three | Cell Four | |
| | | | |

As shown in the Figure 5, the table component has physical entity type commands of table, tablerow and tablecell, where the tablecell command can contain all available commands for the text component. In the example above, the first child TableRow command of the table command has an attribute "Index" defined by value of 0. This indicates that the indicated table row is the first one defined in the table. The attribute of the leftmost table cell command in Figure 5 has the same meaning.

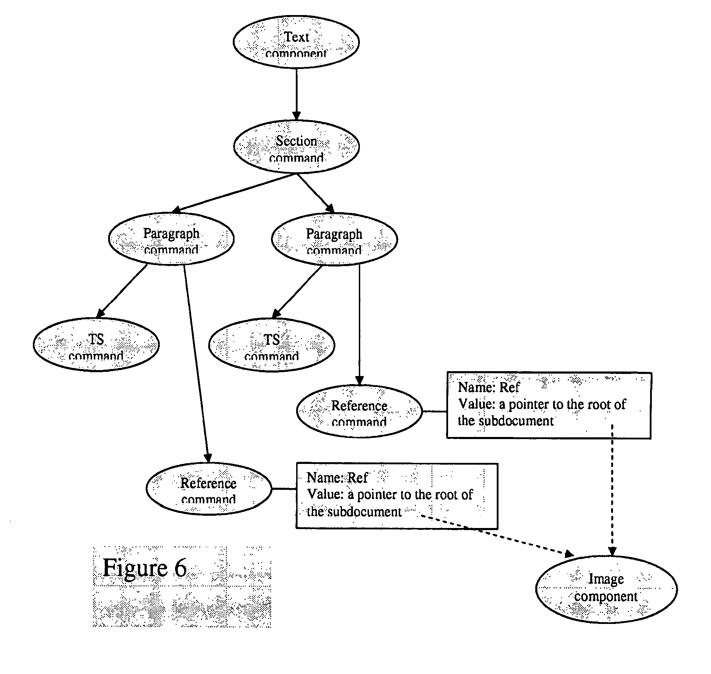

A document sometimes contains subdocuments, for example images, tables, text boxes etc. The DOM structure set forth herein uses a reference command to point to the graph of such subdocuments. Thus, for the following sample document, the attachment server 28 generates the DOM structure shown in Figure 6:

| |
|---|
| This document has subdocument of images like this one 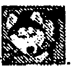 |
| Second paragraph contains the same image 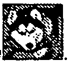 |

The structure shown in Figure 6 is identical to that discussed above in connection with Figures 4 and 5, except for the attributes of the two reference commands. The attachment server 28 constructs the image in "Sample Three" as a separate image component, which contains all of the image data in its own DOM hierarchy. In the DOM structure for the main document, the values of the "Ref" attributes of those two reference commands point to the image component, as indicated by the dashed lines, such that the DOM structure connects together all parts of the document.

Having described the document DOM structure used to implement the embodiment set forth herein, a detailed discussion will now be provided of document DOM structure construction and pagination also used to implement the embodiment.

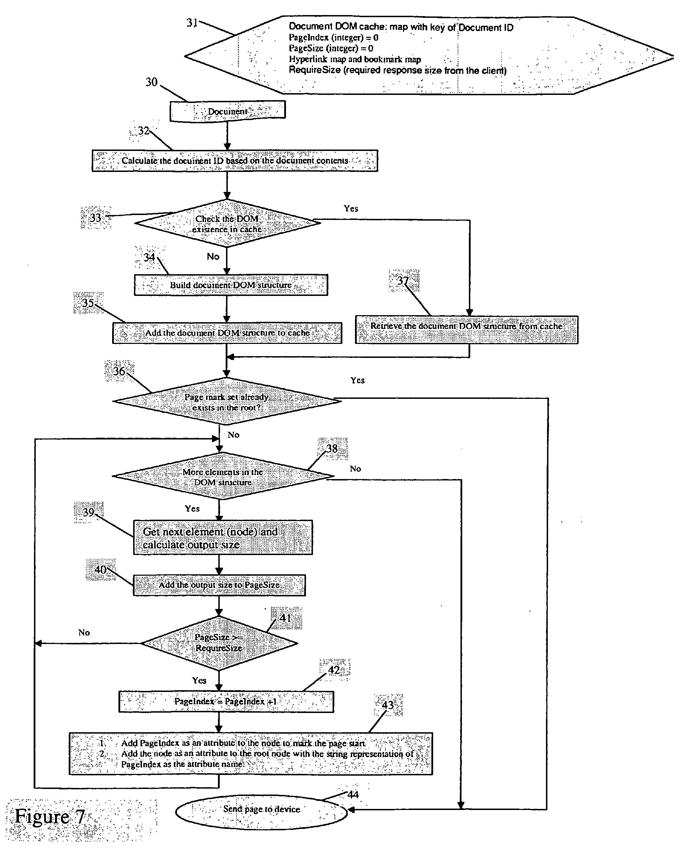

The pagination function is a client and server side operation. Figure 7 shows the processing steps, from which it will be noted that the server 28 uses a map in memory for document DOM cache storage and the key to the map is the document ID. Initially, when the user of a mobile communication device 12 sends a request to the server 28 to view a document, the device 12 sends two attributes and number of bytes it requires (RequireSize) as a response from the server (e.g. 3K bytes). The two attributes are whether the device is a color or monochrome device, and the screen size (width x height x color depth) of the device in pixels. Other information about the device 12 can also be transmitted to the server 28 (e.g. memory size). After the server 28 receives a document-viewing request, it starts the pagination process (step 30), and initializes the variables PageIndex and PageSize.

The following terms and variables are set forth in Figure 7:

The PageIndex variable is defined in the server 28 and used by the server to record the current page index being paginated by the server. The page index is initially set to 0 indicating "Page 1 ".

PageSize is a variable defined in the server 28 and used by the server to record the current size for the page being paginated and is reset to 0 when paginating a new page.

Hyperlink map is a variable defined in the server 28, which is a container consisting of the element type of hyperlink node in the document DOM structure. The key (ID) for each element in the container is the hyperlink target string.

Bookmark map is a variable defined in the server 28 which is a container consisting of the element type of current page index (PageIndex value) for the bookmark in the document DOM structure. The key (ID) for each element in the container is the bookmark string.

The server process constructs a document ID (step 32) based on the document contents and uses the ID to check the document DOM cache (step 33) to determine whether the document DOM structure for that document has been constructed. If the document DOM structure does not exist in the cache, the server builds the DOM structure (step 34) for the document and adds it to the cache (step 35).

To construct the document ID, the original document file is opened in read and binary mode. The server 28 creates a MD5 Context structure, hashes the MD5 context structure with raw binary data byte-by-byte from the file, and finalizes the MD5 context structure and retrieves the 16byte key for the file. The MD5 context structure has the following structure in syntax of C++ language

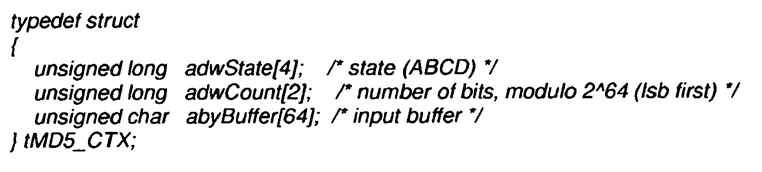

Caching the document DOM structure requires considerable memory, and therefore increases the overall hardware deployment cost. On the other hand, building the DOM structure for a document is even more time and CPU intensive in contrast to the document key construction operation, especially for big documents. Since that processing time is more critical than hardware deployment cost for wireless operation, caching the document DOM is the approach adopted for the preferred embodiment, rather than building the DOM structure for the document each time the server receives a viewing request and then discarding the structure after sending the response back to the client device 12.

Once the document DOM structure has been built and stored in the cache, the server 28 determines whether a page mark has already been set in the root (step 36). If not, the server traverses through the DOM structure (steps 38, 39, 40 and 41) and calculates the output size (PageSize) for each node in the DOM structure based on the number of bytes (RequireSize) provided by the device 12. The server increments the PageIndex (step 42), adds it as an attribute to each node in order to mark the start of each page, and adds each node as an attribute to the root node with the string representation of PageIndex as the attribute name (step 43). Following this pagination function, the attachment server 28 transmits the document page-by-page to the requesting mobile device 12 based on client generated requests (step 44).

The page mark attribute name is associated with the device information and required response size (RequireSize) provided by the device 12, to enable the server to paginate through the document DOM structure and generate the response based on the device capability. For example if the device is a monochrome type, the color information contained inside the DOM structure will be ignored during the server pagination and response generation operations and therefore optimize the wireless bandwidth utilization.

Since the key to the memory map is the document ID, the algorithm used to calculate the document ID (step 32) must guarantee the uniqueness of the key. According to the best mode, as set forth above, the algorithm used inside the server 28 is the MD5 messaging encryption algorithm invented by Professor Ronald L. Rivest of MIT Laboratory for Computer Science and RSA Data Security, Inc. There are several other hashing options that can be used. However MD5 is the most efficient and reliable one based on the broad range of different document content required to be processed by the server 28.

Consider the example of a user requesting to view a document attachment that consists of 200 pages of textual content. The server 28 receives the initial conversion request from device 12 to convert the document attachment and in response constructs a Document Object Model (DOM) for the document content. The server then returns the first chunk (i.e. page) of the content back to the device. The server also returns to the client an indication of the total chunk number (e.g. 40 chunks or viewable pages in the document DOM structure). In the present application, a "chunk" may include up to 3000 bytes of data, which may be more or less then a page of actual text, depending on font styles, formatting, colors or document content. However, for ease of description, the terms "page" and "chunk" may be used interchangeably.

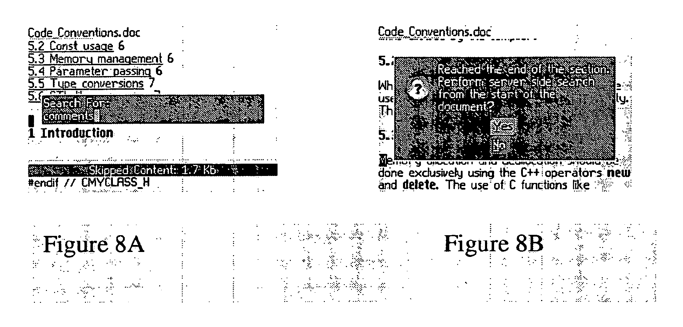

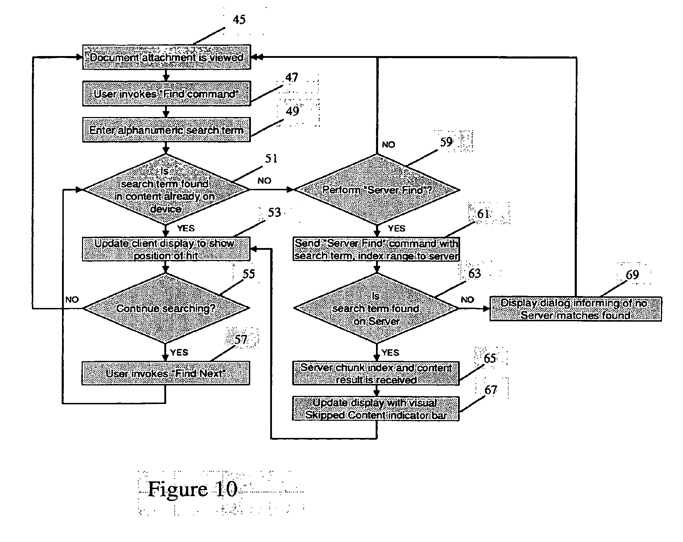

Upon receiving the initial document content (i.e. the first chunk of data) from the server 28, the device 12 parses and displays the content (step 45 in Figure 10). As is conventionally known, the user may invoke the "Find" command on the attachment viewer in response to which the user is prompted to enter an alphanumeric search term (step 47). The "Server Find" command of the present application is linked with the conventional "Find" and "Find Next" commands found in the attachment viewer of device 12. Figure 8A shows a graphical user interface on the mobile device 12 for entering a search string to search a document attachment to be viewed on the device. After entering the search term (step 49), the attachment viewer (i.e. client) searches the first chunk of content on the device.

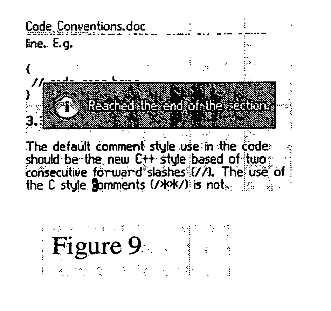

If a match is found (i.e. a YES at step 51), the client screen is updated (step 53) to reflect the found position of the search term by placing the cursor on top of the first letter of the matching alphanumeric text segment or word, as discussed in greater detail below with reference to Figure 9. To continue searching the initial retrieved document content residing on the client device 12 (i.e. a YES at step 55), the user invokes the "Find Next" command in a recurring fashion (step 57).

For each match in the initial retrieved content already residing on the device 12, the client visually updates the display to reflect the position in the document content where the search term is encountered as indicated above.

If no further matches for the "Find" or "Find Next" command are encountered within document content on the client device 12 (i.e. a NO at step 51), a message is displayed informing the user that the searched text has not been found in the section of the document resident on the device. As shown in Figure 8B, this message prompts the user to initiate a server side search for the requested text string.

If the user selects "Yes" a search is initiated through the remaining document content on the attachment server 28 that has not yet been retrieved by the device 12 (i.e. a YES at step 59). Specifically, the client device 12 sends a "Server Find" command to the server 28, containing the string to be searched and a chunk index range to search (step 61). For the example of Figure 8A, the client issues a "Server Find" command to the server with the search term "comments" and a chunk index range to search of, for example, "2-40". The chunk index does not contain chunk 1 since chunk 1 is already residing on the device 12.

The server 28 then searches through the DOM for any document content containing the search word "comments" for chunk 2 through 40.

If the attachment server 28 encounters a match with the input search string (i.e. a YES at step 63), it returns the attachment section back to the attachment viewer of client device 12 (step 65), along with the chunk index where the match was found (e.g. if the next match is in chunk 20 then that chunk content is returned back to the client along with chunk index 20). The client 12 then parses and displays the contents (i.e. of chunk 20) and highlights the position of the search "hit" to the user. Also, the user is visually informed that the contents for chunks 2 through 19 resides back at the server 28 by inserting a visual "Skipped Content" indicator bar in between the contents of chunk 1 - 20. (step 67). The match is indicated on the device 12 in a conventional manner (step 53) by highlighting the first character of the search string found in the retrieved content, as discussed in greater detail below.

If the user continues the search by selecting the conventional "Find Next" command while content still remains at the server 28 (step 57), then any subsequent match within the content of chunk 20 is displayed (step 53), as described previously. When no further matches are encountered within chunk 20, then the user is prompted again (Figure 8B) to perform a server find operation if so desired.

The "Server Find" command is issued again (step 61) with the search term, but this time the requested chunk index is 21 through 40 since the client already knows that chunk 1 through 20 has been searched through. If an additional match is found in (e.g. chunk 39) then the content of chunk 39 and the chunk index number 39 are returned back to the client (step 65) for parsing and display. Again a "Skipped Content" visual indicator bar is inserted between the content of chunk 20 and chunk 39 (step 67) to indicate to the user that content still remains back at the server 28, which has not yet been retrieved to the device 12.

The server side search may be repeatedly performed until all sections with matches to the search string have been downloaded to the device 12. On execution of the final "Server Find" command, the server 28 searches through the DOM contents for chunk 40. In this case no further matches are found for the search term in the remaining chunk. Once that occurs, a "Reached end of section" dialog is presented to the user (step 69), as shown in Figure 9. As indicated above, a match is indicated on the device 12 by highlighting the first character of the search string found in the retrieved content. This is illustrated in Figure 9 (where the search string is "comments" and the first letter "c" is highlighted).

In conclusion, to use the example described above, the "Server Find" operation allows the client to search a 200 page document while retrieving only the chunks of content where a match is found, for parsing and display (e.g. chunk 1, 20 and 39), as opposed to retrieving a total of 40 chunks of contents back to the device for parsing and display to achieve the same result. Therefore the "Server Find" command greatly optimizes bandwidth, device storage usage and total response time for document search by only returning the relevant chunks or sections to the device 12 for viewing by the user.

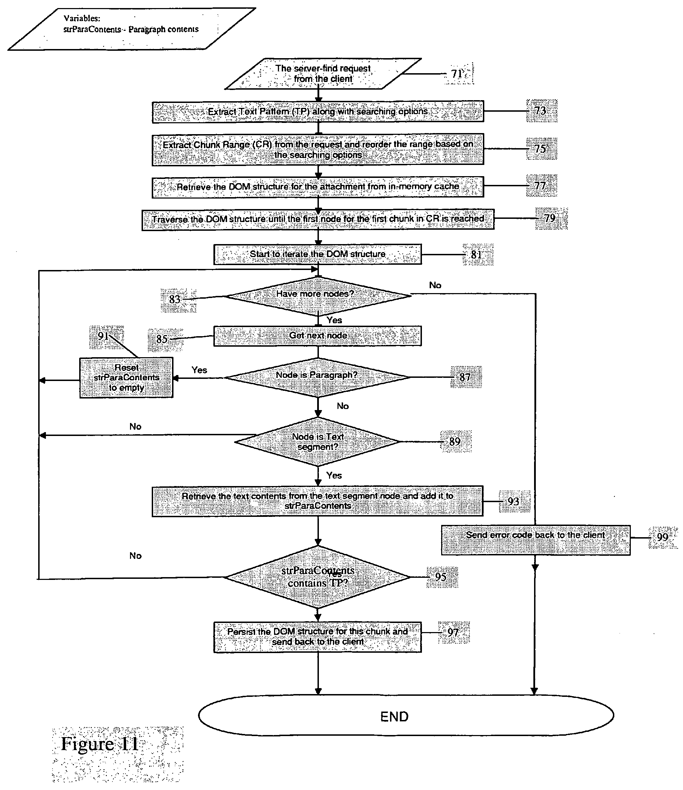

Turning now to the server side process illustrated in Figure 11, when the attachment server 28 receives a server find request for an attachment (step 71), it first extracts the text pattern to be searched (step 73) along with the various search options, i.e. case sensitive, forward or backward search, etc. In addition, the attachment server extracts from the request the chunk range to be searched and reorders the chunk range based on the search options (step 75).

After retrieving the pre-paginated document DOM structure for the attachment from the in-memory document DOM cache (step 79), the attachment server 28 traverses the DOM structure (step 81) until it reaches the start node for the first chunk in the chunk range. It continues to traverse the DOM structure (i.e. a YES at step 83 followed by step 85) and handle the nodes of command type paragraph (step 87) or text segment (step 89) in the DOM structure. When parsing the paragraph commands the attachment server 28 resets the internal variable paragraph text contents (step 91); retrieves the text contents stored in the text segment command and adds the text to the paragraph contents (step 93). The server then searches the text contents for the text pattern (step 95). The attachment server iterates through the DOM structure until the text pattern has been found or all the chunks in the chunk range have been searched (i.e. a NO at step 83). If no such text pattern is found in the DOM structure specified by the chunk range the attachment server will return an error (step 99). Otherwise the server returns the contents of the first chunk containing the text pattern (step 97).

The attachment server 28 may split the matching text contents into multiple chunks, but will always persist the DOM structure for the chunk where the matching text starts and indicate the number of characters of the text pattern contained in the persisted DOM structure in the response to the client 12.

A person skilled in the art, having read this description of the preferred embodiment, may conceive of variations and alternative examples.

## Claims

1. A process for locating a search string in a document stored on a server and displaying the search string on a mobile device, comprising:
building (34) and caching (35) a graph structure within said server (28) representing a map of said document (30), wherein said graph structure paginates said document into individual chunks for display on said mobile device (12);
user initiated transmitting of successive chunks of said document from said server to said mobile device for display by said mobile device along with a total number of said individual chunks;
user initiated searching of at least one of said successive chunks within said mobile device (47) and,
in the event said search string is not located and the total number of said individual chunks has not been searched then initiating a further search through remaining chunks within said server (61);
in the event that said search string is located within said remaining chunks, transmitting a first chunk containing said search string (65); and
in the event said search string is located in either said at least one of said successive or remaining chunks then highlighting said search string within a said chunk at said mobile device (53), and otherwise providing an indication at said mobile device of no matches found (69).

2. The process of claim 1, wherein initiating said further search comprises:
sending said search string and an index range of said remaining chunks subsequent to said at least one of said successive chunks from said mobile device to said server;
searching said remaining chunks within said index range for said search string; and
in the event said search string is located then transmitting said first chunk containing said search string and an associated chunk index from the server to said device.

3. The process of claim 1 or claim 2, wherein said highlighting comprises updating a display of said device to reflect the position in the document where the search string is located (53)

4. The process of any one of claims 1 to 3, further comprising generation of a display at said mobile communication device for prompting said user to initiate said further search through remaining chunks within said server (59).

5. The process of claim 3 or claim 4, further comprising generation of a skipped content indicator bar on said display between said successive chunks (67), thereby providing an indication to said user of said remaining chunks within the server not yet been transmitted to the device.

6. The process of any one of claims 2 to 5, wherein said searching said remaining chunks comprises:
extracting said search string and said index range to be searched (73, 75);
iterating the graph structure (81) and for each node in said range of remaining chunks parsing any paragraph and text commands (85, 87, 89), and for each paragraph command retrieving and storing any text content from said text commands in a paragraph content variable (93) and searching said text content in said paragraph content variable for said search string (95); and
upon locating said search string persisting (97) said graph structure for each of said remaining chunks containing said search string and transmitting each of said remaining chunks and associated chunk indexes to said mobile device.

7. The process of claim 6, further comprising extracting search options along with said search string and index range, and reordering said index range based on said search options.

8. The process of any one of claims 1 to 7, wherein said graph structure is a Document Object Model DOM.

9. A process implementable in a server for locating a search string in a document stored on the server comprising:
building (34) and caching (35) a graph structure within said server (28) representing a map of a document (30), wherein said graph structure paginates said document into individual chunks;
transmitting successive chunks of said document along with a total number of said individual chunks;
searching through remaining chunks within said server for a search string (81, 83, 85, 87, 89, 93, 95); and
in the event said search string is located in said remaining chunks, then transmitting each of said remaining chunks containing said search string (97);
wherein said searching further comprises:
receiving said search string and an index range of said remaining chunks;
searching said remaining chunks within said index range for said search string; and
in the event said search string is located then transmitting a first chunk containing said search string and an associated chunk index.

10. The process of claim 9, wherein said searching further comprises:
extracting said search string and said index range to be searched (73, 75);
iterating the graph structure (81) and for each node in said range of remaining chunks parsing any paragraph and text commands (85, 87, 89), and for each paragraph command retrieving and storing any text content from said text commands in a paragraph content variable (93) and searching said text content in said paragraph content variable for said search string (95); and
upon locating said search string persisting (97) said graph structure for each of said remaining chunks containing said search string and transmitting each of said remaining chunks and associated chunk indexes.

11. The process of claim 10, further comprising extracting search options along with said search string and index range, and reordering said index range based on said search options.

12. The process of any one of claims 9 to 11, wherein said graph structure is a Document Object Model DOM.

13. A process implementable on a mobile device for locating a search string in a document stored on a server comprising:
receiving and displaying successive chunks of a document;
searching at least one of said successive chunks for a user entered search string (47) and in the event said search string is located then highlighting said search string (53);
in the event said search string is not located prompting said user to initiate a further search through remaining remotely stored chunks within said server (59); and
otherwise providing an indication at said mobile device of no matches found (69).

14. The process of claim 13 further comprising updating a display of said device to reflect the position in the document where the search string is located (53).

15. The process of claim 13 or claim 14, further comprising generation of a skipped content indicator bar on said display between said successive chunks (67), thereby providing an indication to said user of said remaining chunks within the server that wave not yet been transmitted to the device.

16. A server (28) capable of locating a search string in a document stored on the server comprising:
means for building and caching a graph structure within said server (28) representing a map of a document (30), wherein said graph structure paginates said document into individual chunks;
means for transmitting successive chunks of said document along with a total number of said individual chunks;
means for searching through remaining chunks within said server for a search string; and
means for transmitting each of said remaining chunks containing said search string in the event said search string is located in said remaining chunks;
wherein said searching means further comprises:
means for receiving said search string and an index range of said remaining chunks;
means for searching said remaining chunks within said index range for said search string; and
means for transmitting a first chunk containing said search string and an associated chunk index in the event said search string is located.

17. The server of claim 16, wherein said searching means further comprises:
means for extracting said search string and said index range to be searched;
means for iterating the graph structure and for each node in said range of remaining chunks parsing any paragraph and text commands, and for each paragraph command retrieving and storing any text content from said text commands in a paragraph content variable and searching said text content in said paragraph content variable for said search string; and
means for maintaining said graph structure for each of said remaining chunks containing said search string upon locating said search string and transmitting each of said remaining chunks and associated chunk indexes.

18. The server of claim 17, further comprising means for extracting search options along with said search string and index range, and reordering said index range based on said search options.

19. A mobile device (12) capable of locating a search string in a document stored on a server comprising:
means for receiving and displaying successive chunks of a document (30);
means for searching at least one of said successive chunks for a user entered search string and in the event said search string is located then highlighting said search string;
means for prompting said user to initiate a further search through remaining remotely stored chunks within said server in the event said search string is not located; and
means for providing an indication at said mobile device of no matches found in the event that no matches are found.

20. The mobile device of claim 19 further comprising means for updating a display of said device to reflect the position in the document where the search string is located.

21. The mobile device of claim 19 or claim 20, further comprising means for generation of a skipped content indicator bar on said display between said successive chunks, thereby providing an indication to said user of said remaining chunks within the server that wave not yet been transmitted to the device.

22. A computer readable medium executable on a processor of the server of claim 16 for implementing the process of any of claims 9 to 12.

23. A computer readable medium executable on a processor of the mobile device of claim 19 for implementing the process of any of claims 13 to 15.

## Patentansprüche

1. Prozess zum Finden einer Zeichenkette in einem auf einem Server gespeicherten Dokument und zum Anzeigen der Zeichenkette auf einem Mobilgerät, umfassend:
das Aufbauen (34) und das Zwischenspeichern (35) einer Grafikstruktur innerhalb des Servers (28), welche eine Abbildung des Dokuments (30) repräsentiert, wobei die Grafikstruktur das Dokument in individuelle Segmente zur Anzeige auf dem Mobilgerät (12) paginiert;
das vom Benutzer initiierte Übertragen aufeinander folgender Segmente des Dokuments von dem Server zu dem Mobilgerät zur Anzeige durch das Mobilgerät zusammen mit einer Gesamtanzahl der individuellen Segmente;
das vom Benutzer initiierte Durchsuchen von mindestens einem der aufeinander folgenden Segmente innerhalb des Mobilgeräts (47) und
falls die Zeichenkette nicht gefunden wird und die Gesamtanzahl der individuellen Segmente noch nicht durchsucht wurde, das anschließende Initiieren eines weiteren Durchsuchens der restlichen Segmente innerhalb des Servers (61);
falls die Zeichenkette innerhalb der restlichen Segmente gefunden wird, das Übertragen eines ersten Segments, welches die Zeichenkette enthält (65); und
falls die Zeichenkette entweder in dem mindestens einen der aufeinander folgenden Segmente oder in den restlichen Segmenten gefunden wird, das Hervorheben der Zeichenkette innerhalb eines Segments auf dem Mobilgerät (53) und ansonsten das Bereitstellen einer Anzeige auf dem Mobilgerät, dass keine Übereinstimmungen gefunden wurden (69).

2. Prozess gemäß Anspruch 1, wobei das Initiieren des weiteren Durchsuchens umfasst:
das Senden der Zeichenkette und eines Indexbereichs der restlichen Segmente im Anschluss an das letzte der aufeinander folgenden Segmente von dem Mobilgerät zu dem Server;
das Durchsuchen der restlichen Segmente innerhalb des Indexbereichs nach der Zeichenkette; und
falls die Zeichenkette gefunden wird, das anschließende Übertragen des ersten Segments, welches die Zeichenkette enthält, und eines assoziierten Segment-Index von dem Server zu dem Gerät.

3. Prozess gemäß Anspruch 1 oder Anspruch 2, wobei das Hervorheben das Aktualisieren einer Anzeige des Geräts umfasst, um die Position in dem Dokument widerzuspiegeln, wo sich die Zeichenkette befindet (53).

4. Prozess gemäß jedem der Ansprüche 1 bis 3, des Weiteren umfassend das Erzeugen einer Anzeige auf dem mobilen Kommunikationsgerät zum Auffordern des Benutzers, das weitere Durchsuchen der restlichen Segmente innerhalb des Servers zu initiieren (59).

5. Prozess gemäß Anspruch 3 oder Anspruch 4, des Weiteren umfassend das Erzeugen einer Anzeigeleiste für übersprungenen Inhalt auf der Anzeige zwischen den aufeinander folgenden Segmenten (67), wodurch dem Benutzer angezeigt wird, welche der restlichen Segmente innerhalb des Servers noch nicht zum Gerät übertragen wurden.

6. Prozess gemäß jedem der Ansprüche 2 bis 5, wobei das Durchsuchen der restlichen Segmente umfasst:
das Extrahieren der Zeichenkette und des zu durchsuchenden Indexbereichs (73, 75);
das Iterieren der Grafikstruktur (81) und für jeden Knoten in dem Bereich der restlichen Segmente das Parsen aller Absatz- und Textbefehle (85, 87, 89), und für jeden Absatzbefehl das Abrufen und Speichern allen Textinhalts aus den Textbefehlen in einer Absatzinhaltsvariablen (93) und das Durchsuchen des Textinhalts in der Absatzinhaltsvariablen nach der Zeichenkette (95); und
beim Finden der Zeichenkette das Beibehalten (97) der Grafikstruktur für jedes der restlichen Segmente, welche die Zeichenkette enthalten, und das Übertragen von jedem der restlichen Segmente und der assoziierten Segment-Indexe zu dem Mobilgerät.

7. Prozess gemäß Anspruch 6, des Weiteren umfassend das Extrahieren von Suchoptionen zusammen mit der Zeichenkette und dem Indexbereich und das Neuordnen des Indexbereichs basierend auf den Suchoptionen.

8. Prozess gemäß jedem der Ansprüche 1 bis 7, wobei die Grafikstruktur ein Dokumentobjektmodell (Document Object Model - DOM) ist.

9. In einem Server implementierbarer Prozess zum Suchen einer Zeichenkette in einem auf dem Server gespeicherten Dokument, umfassend:
das Aufbauen (34) und das Zwischenspeichern (35) einer Grafikstruktur innerhalb des Servers (28), welche eine Abbildung eines Dokuments (30) repräsentiert, wobei die Grafikstruktur das Dokument in individuelle Segmente paginiert;
das Übertragen aufeinander folgender Segmente des Dokuments zusammen mit einer Gesamtanzahl der individuellen Segmente;
das Durchsuchen der restlichen Segmente innerhalb des Servers nach einer Zeichenkette (81, 83, 85, 87, 89, 93, 95); und
falls die Zeichenkette in den restlichen Segmenten gefunden wird, das anschließende Übertragen von jedem der restlichen Segmente, welche die Zeichenkette enthalten (97);
wobei das Durchsuchen des Weiteren umfasst:
das Empfangen der Zeichenkette und eines Indexbereichs der restlichen Segmente;
das Durchsuchen der restlichen Segmente innerhalb des Indexbereichs nach der Zeichenkette; und
falls die Zeichenkette gefunden wird, das anschließende Übertragen eines ersten Segments, welches die Zeichenkette enthält, und eines assoziierten Segment-Index.

10. Prozess gemäß Anspruch 9, wobei das Durchsuchen des Weiteren umfasst:
das Extrahieren der Zeichenkette und des zu durchsuchenden Indexbereichs (73, 75);
das Iterieren der Grafikstruktur (81) und für jeden Knoten in dem Bereich der restlichen Segmente das Parsen aller Absatz- und Textbefehle (85, 87, 89), und für jeden Absatzbefehl das Abrufen und Speichern allen Textinhalts aus den Textbefehlen in einer Absatzinhaltsvariablen (93) und das Durchsuchen des Textinhalts in der Absatzinhaltsvariablen nach der Zeichenkette (95); und
beim Finden der Zeichenkette das Beibehalten (97) der Grafikstruktur für jedes der restlichen Segmente, welche die Zeichenkette enthalten, und das Übertragen von jedem der restlichen Segmente und der assoziierten Segment-Indexe.

11. Prozess gemäß Anspruch 10, des Weiteren umfassend das Extrahieren von Suchoptionen zusammen mit der Zeichenkette und dem Indexbereich und das Neuordnen des Indexbereichs basierend auf den Suchoptionen.

12. Prozess gemäß jedem der Ansprüche 9 bis 11, wobei die Grafikstruktur ein Dokumentobjektmodell (Document Object Model- DOM) ist.

13. Auf einem Mobilgerät implementierbarer Prozess zum Suchen einer Zeichenkette in einem auf einem Server gespeicherten Dokument, umfassend:
das Empfangen und Anzeigen von aufeinander folgenden Segmenten eines Dokuments;
das Durchsuchen von mindestens einem der aufeinander folgenden Segmente nach einer vom Benutzer eingegebenen Zeichenkette (47), und falls die Zeichenkette gefunden wird, das anschließende Hervorheben der Zeichenkette (53);
falls die Zeichenkette nicht gefunden wird, das Auffordern des Benutzers, das weitere Durchsuchen der restlichen entfernt gespeicherten Segmente innerhalb des Servers (59) zu initiieren; und
ansonsten das Bereitstellen einer Anzeige auf dem Mobilgerät, dass keine Übereinstimmungen gefunden wurden (69).

14. Prozess gemäß Anspruch 13, des Weiteren umfassend das Aktualisieren einer Anzeige des Geräts, um die Position in dem Dokument widerzuspiegeln, wo sich die Zeichenkette befindet (53).

15. Prozess gemäß Anspruch 13 oder Anspruch 14, des Weiteren umfassend das Erzeugen einer Anzeigeleiste für übersprungenen Inhalt auf der Anzeige zwischen den aufeinander folgenden Segmenten (67), wodurch dem Benutzer angezeigt wird, welche der restlichen Segmente innerhalb des Servers noch nicht zum Gerät übertragen wurden.

16. Server (28), der in der Lage ist, eine Zeichenkette in einem Dokument zu finden, das auf dem Server gespeichert ist, umfassend:
Mittel zum Aufbauen und Zwischenspeichern einer Grafikstruktur innerhalb des Servers (28), welche eine Abbildung eines Dokuments (30) repräsentiert, wobei die Grafikstruktur das Dokument in individuelle Segmente paginiert;
Mittel zum Übertragen aufeinander folgender Segmente des Dokuments zusammen mit einer Gesamtanzahl der individuellen Segmente;
Mittel zum Durchsuchen der restlichen Segmente innerhalb des Servers nach einer Zeichenkette; und
Mittel zum Übertragen von jedem der restlichen Segmente, wekche die Zeichenkette enthalten, falls die Zeichenkette in den restlichen Segmenten gefunden wird;
wobei das Mittel zum Durchsuchen des Weiteren umfasst:
Mittel zum Empfangen der Zeichenkette und eines Indexbereichs der restlichen Segmente;
Mittel zum Durchsuchen der restlichen Segmente innerhalb des Indexbereichs nach der Zeichenkette; und
Mittel zum Übertragen eines ersten Segments, welches die Zeichenkette enthält, und eines assoziierten Segment-Index, falls die Zeichenkette gefunden wird.

17. Server gemäß Anspruch 16, wobei das Mittel zum Durchsuchen des Weiteren umfasst:
Mittel zum Extrahieren der Zeichenkette und des zu durchsuchenden Indexbereichs;
Mittel zum Iterieren der Grafikstruktur und für jeden Knoten in dem Bereich der restlichen Segmente zum Parsen aller Absatz- und Textbefehle, und für jeden Absatzbefehl zum Abrufen und Speichern allen Textinhalts aus den Textbefehlen in einer Absatzinhaltsvariablen und zum Durchsuchen des Textinhalts in der Absatzinhaltsvariablen nach der Zeichenkette; und
Mittel zum Beibehalten der Grafikstruktur für jedes der restlichen Segmente, welche die Zeichenkette enthalten, beim Finden der Zeichenkette, und zum Übertragen von jedem der restlichen Segmente und der assoziierten Segment-Indexe.

18. Server gemäß Anspruch 17, des Weiteren umfassend Mittel zum Extrahieren von Suchoptionen zusammen mit der Zeichenkette und dem Indexbereich und zum Neuordnen des Indexbereichs basierend auf den Suchoptionen.

19. Mobilgerät (12), das in der Lage ist, eine Zeichenkette in einem Dokument zu finden, das auf einem Server gespeichert ist, umfassend:
Mittel zum Abrufen und Anzeigen von aufeinander folgenden Segmenten eines Dokuments (30);
Mittel zum Durchsuchen von mindestens einem der aufeinander folgenden Segmente nach einer vom Benutzer eingegebenen Zeichenkette, und zum anschließenden Hervorheben der Zeichenkette, falls die Zeichenkette gefunden wird;
Mittel zum Auffordern des Benutzers, das weitere Durchsuchen der restlichen entfernt gespeicherten Segmente innerhalb des Servers zu initiieren, falls die Zeichenkette nicht gefunden wird; und
Mittel zum Bereitstellen einer Anzeige auf dem Mobilgerät, dass keine Übereinstimmungen gefunden wurden, falls keine Übereinstimmungen gefunden wurden.

20. Mobilgerät gemäß Anspruch 19, des Weiteren umfassend Mittel zum Aktualisieren einer Anzeige des Geräts, um die Position in dem Dokument widerzuspiegeln, wo sich die Zeichenkette befindet.

21. Mobilgerät gemäß Anspruch 19 oder Anspruch 20, des Weiteren umfassend Mittel zum Erzeugen einer Anzeigeleiste für übersprungenen Inhalt auf der Anzeige zwischen den aufeinander folgenden Segmenten, wodurch dem Benutzer angezeigt wird, welche der restlichen Segmente innerhalb des Servers noch nicht zum Gerät übertragen wurden.

22. Computerlesbares Medium, das auf einem Prozessor des Servers gemäß Anspruch 16 ausführbar ist, um den Prozess gemäß jedem der Ansprüche 9 bis 12 zu implementieren.

23. Computerlesbares Medium, das auf einem Prozessor des Mobilgeräts gemäß Anspruch 19 ausführbar ist, um den Prozess gemäß jedem der Ansprüche 13 bis 15 zu implementieren.

## Revendications

1. Procédé destiné à trouver une chaîne de caractères recherchée dans un document stocké sur un serveur et à afficher ladite chaîne sur un dispositif mobile, comprenant :
la construction (34) et la mise en antémémoire (35) d'une structure graphique dans ledit serveur (28) représentant une carte dudit document (30), ladite structure graphique paginant ledit document en fragments individuels afin de les afficher sur ledit dispositif mobile (12) ;
la transmission lancée par l'utilisateur de fragments successifs dudit document dudit serveur audit dispositif mobile afin de les afficher sur ledit dispositif mobile avec un nombre total desdits fragments individuels ;
la recherche lancée par l'utilisateur d'au moins un desdits fragments successifs dans ledit dispositif mobile (47) et,
si ladite chaîne de caractères recherchée n'est pas trouvée et si une recherche n'a pas été effectuée dans le nombre total desdits fragments individuels, le lancement d'une autre recherche dans les fragments restants dans ledit serveur (61) ;
si ladite chaîne de caractères recherchée est trouvée dans lesdits fragments restants, la transmission d'un premier fragment contenant ladite chaîne de caractères (65) ; et
si ladite chaîne de caractères recherchée est trouvée dans au moins un desdits fragment(s) successif(s) ou restant(s) la mise en évidence de ladite chaîne de caractères recherchée dans un desdits fragments au niveau dudit dispositif mobile (53) et, sinon, au niveau dudit dispositif mobile d'une indication qu'aucune correspondance n'a été trouvée (69).

2. Procédé de la revendication 1 dans lequel le lancement de ladite recherche complémentaire comprend en outre :
l'envoi de ladite chaîne de caractères recherchée et d'une plage d'indice desdits fragments restants suivant au moins un desdits fragments successifs dudit dispositif mobile audit serveur ;
la recherche de ladite chaîne de caractères dans lesdits fragments restants dans ladite plage d'indice ; et
si ladite chaîne de caractères recherchée est trouvée, la transmission dudit premier fragment contenant ladite chaîne de caractères recherchée et d'un indice de fragment associé du serveur audit dispositif.

3. Procédé de la revendication 1 ou 2 dans lequel ladite mise en évidence comprend la mise à jour d'un affichage dudit dispositif pour indiquer l'endroit où se trouve la chaîne de caractères recherchée (53) dans le document.

4. Procédé de l'une quelconque des revendications 1 à 3, comprenant en outre la génération d'un affichage au niveau dudit dispositif de communication mobile afin d'inviter ledit utilisateur à lancer ladite recherche complémentaire dans des fragments restants dans ledit serveur (59).

5. Procédé de la revendication 3 ou 4 comprenant en outre la génération d'une barre d'indicateur de contenu sauté sur ledit affichage entre lesdits fragments successifs (67), afin d'indiquer audit utilisateur lesquels desdits fragments restants dans le serveur n'ont pas encore été transmis au dispositif.

6. Procédé de l'une quelconque des revendications 2 à 5, dans lequel ladite recherche dans les fragments restants comprend :
l'extraction de ladite chaîne de caractères recherchée et de ladite plage d'indice où faire la recherche (73, 75) ;
l'itération de la structure graphique (81) et, pour chaque noeud dans ladite plage de fragments restants, l'analyse de toute commande de paragraphe et de texte (85, 87, 89) et, pour chaque commande de paragraphe, la récupération et le stockage de tout contenu de texte venant desdites commandes de texte dans une variable de contenu de paragraphe (93) et la recherche de ladite chaîne de caractères (95) dans ledit contenu de texte dans ladite variable de contenu de paragraphe ; et
lorsque ladite chaîne de caractères recherchée est trouvée, la persistance (97) de ladite structure graphique pour chacun desdits fragments restants contenant ladite chaîne de caractères recherchée et la transmission de chacun desdits fragments restants et des indices de fragments associés audit dispositif mobile.

7. Procédé de la revendication 6 comprenant en outre l'extraction des options de recherche avec ladite chaîne de caractères et ladite plage d'indice, et la réorganisation de ladite plage d'indice sur la base desdites options de recherche.

8. Procédé de l'une quelconque des revendications 1 à 7, dans lequel ladite structure graphique est un Modèle Objet de Document DOM.

9. Procédé pouvant être implémenté dans un serveur afin de trouver une chaîne de caractères recherchée dans un document stocké sur le serveur, comprenant :
la construction (34) et la mise en antémémoire (35) d'une structure graphique dans ledit serveur (28) représentant une carte d'un document (30), dans lequel ladite structure graphique pagine ledit document en fragments individuels ;
la transmission de fragments successifs dudit document avec un nombre total desdits fragments individuels ;
la recherche d'une chaîne de caractères (81, 83, 85, 87, 89, 93, 95) dans les fragments restants dans ledit serveur, et
si ladite chaîne de caractères recherchée est trouvée dans lesdits fragments restants, la transmission de chacun desdits fragments restants contenant ladite chaîne de caractères recherchée (97) ;
ladite recherche comprenant en outre :
la réception de ladite chaîne de caractères recherchée et d'une plage d'indice desdits fragments restants ;
la recherche de ladite chaîne de caractères dans lesdits fragments restants dans ladite plage d'indice ; et,
si ladite chaîne de caractères à chercher est trouvée, la transmission d'un premier fragment contenant ladite chaîne de caractères à chercher et d'un indice de fragment associé.

10. Procédé de la revendication 9, dans lequel ladite recherche comprend en outre :
l'extraction de ladite chaîne de caractères recherchée et de ladite plage d'indice où faire la recherche (73, 75) ;
l'itération de la structure graphique (81) et, pour chaque noeud dans ladite plage de fragments restants, l'analyse de toute commande de paragraphe et de texte (85, 87, 89) et, pour chaque commande de paragraphe, la récupération et le stockage de tout contenu de texte venant desdites commandes de texte dans une variable de contenu de paragraphe (93) et la recherche de ladite chaîne de caractères (95) dans ledit contenu de texte dans ladite variable de contenu de paragraphe ; et
lorsque ladite chaîne de caractères recherchée est trouvée, la persistance (97) de ladite structure graphique pour chacun desdits fragments restants contenant ladite chaîne de caractères recherchée et la transmission de chacun desdits fragments restants et des indices de fragments associés.

11. Procédé de la revendication 10 comprenant en outre l'extraction des options de recherche avec ladite chaîne de caractères et la plage d'indice, et la réorganisation de ladite plage d'indice sur la base desdites options de recherche.

12. Procédé de l'une quelconque des revendications 9 à 11, dans lequel ladite structure graphique est un Modèle Objet de Document DOM.

13. Procédé pouvant être implémenté sur un dispositif mobile afin de trouver une chaîne de caractères recherchée dans un document stocké sur un serveur, comprenant :
la réception et l'affichage de fragments successifs d'un document ;
la recherche d'une chaîne de caractères (47) saisie par un utilisateur dans au moins un desdits fragments successifs et, si ladite chaîne de caractères recherchée est trouvée, la mise en évidence de ladite chaîne de caractères (53) ;
Si ladite chaîne de caractères recherchée n'est pas trouvée, une invitation dudit utilisateur à lancer une autre recherche dans des fragments restants stockés à distance sur ledit serveur (59) ; et
sinon, l'envoi d'une indication, au niveau dudit dispositif mobile, qu'aucune correspondance n'a été trouvée (69).

14. Procédé de la revendication 13, comprenant en outre la mise à jour d'un affichage dudit dispositif pour indiquer l'endroit où la chaîne de caractères recherchée (53) se trouve dans le document.

15. Procédé de la revendication 13 ou 14 comprenant en outre la génération d'une barre d'indicateur de contenu sauté sur ledit affichage entre lesdits fragments successifs (67), indiquant ainsi audit utilisateur lesquels desdits fragments restants dans le serveur n'ont pas encore été transmis au dispositif.

16. Serveur (28) capable de trouver une chaîne de caractères recherchée dans un document stocké sur le serveur, comprenant :
un moyen pour construire et mettre en antémémoire une structure graphique dans ledit serveur (28) représentant une carte d'un document (30), dans lequel ladite structure graphique pagine ledit document en fragments individuels ;
un moyen pour transmettre des fragments successifs dudit document avec un nombre total desdits fragments individuels ;
un moyen pour rechercher, dans lesdits fragments restants dans ledit serveur, une chaîne de caractères ; et
un moyen pour transmettre chacun desdits fragments restants contenant ladite chaîne de caractères recherchée si ladite chaîne de caractères recherchée est trouvée dans lesdits fragments restants ;
dans lequel ledit moyen de recherche comprend en outre:
un moyen pour recevoir ladite chaîne de caractères recherchée et une plage d'indice desdits fragments restants ;
un moyen pour rechercher ladite chaîne de caractères dans lesdits fragments restants dans ladite plage d'indice ; et
un moyen pour transmettre un premier fragment contenant ladite chaîne de caractères recherchée et un indice de fragments associés si ladite chaîne de caractères est trouvée.

17. Serveur de la revendication 16, dans lequel ledit moyen de recherche comprend en outre :
un moyen pour extraire ladite chaîne de caractères recherchée et ladite plage d'indice où faire la recherche ;
un moyen servant à itérer la structure graphique et, pour chaque noeud dans ladite plage de fragments restants, à analyser toute commande de paragraphe et de texte, et, pour chaque commande de paragraphe, à récupérer et stocker tout contenu de texte venant desdites commandes de texte dans une variable de contenu de paragraphe et à rechercher ladite chaîne de caractères dans ledit contenu de texte de ladite variable de contenu de paragraphe ; et
un moyen pour assurer la persistance de ladite structure graphique pour chacun desdits fragments restants contenant ladite chaîne de caractères recherchée lorsque celle-ci est trouvée, et pour transmettre chacun desdits fragments restants et les indices de fragments associés.

18. Serveur de la revendication 17, comprenant en outre un moyen pour extraire les options de recherche avec ladite chaîne de caractères recherchée et ladite plage d'indice, et pour réorganiser ladite plage d'indice sur la base desdites options de recherche.

19. Dispositif mobile (12) capable de trouver une chaîne de caractères recherchée dans un document stocké sur un serveur, comprenant :
un moyen pour recevoir et afficher des fragments successifs d'un document (30) ;
un moyen pour rechercher une chaîne de caractères saisie par un utilisateur dans au moins un desdits fragments successifs et, si ladite chaîne de caractères recherchée est trouvée, pour mettre en évidence ladite chaîne de caractères recherchée.
un moyen pour inviter ledit utilisateur à lancer une autre recherche dans des fragments restants stockés à distance sur ledit serveur si ladite chaîne de caractères recherchée n'est pas trouvée, et
un moyen pour indiquer qu'aucune correspondance n'a été trouvée au niveau dudit dispositif mobile si aucune correspondance n'est trouvée.

20. Dispositif de la revendication 19 comprenant en outre un moyen pour mettre à jour un affichage dudit dispositif afin d'indiquer l'endroit où la chaîne de caractères recherchée se trouve dans le document.

21. Dispositif mobile de la revendication 19 ou 20 comprenant en outre un moyen pour générer une barre d'indicateur de contenu sauté sur ledit affichage entre lesdits fragments successifs afin d'indiquer audit utilisateur lesquels desdits fragments restants dans le serveur n'ont pas encore été transmis au dispositif.

22. Support informatique lisible exécutable sur un processeur du serveur de la revendication 16 servant à implémenter le processus de l'une quelconque des revendications 9 à 12.

23. Support informatique lisible exécutable sur un processeur du dispositif mobile de la revendication 19 servant à implémenter le processus de l'une quelconque des revendications 13 à 15.
